# EUROPÄISCHE PATENTANMELDUNG

(11) **EP 2 091 000 A2**
(43) Veröffentlichungstag der Anmeldung: **19.08.2009**
(21) Anmeldenummer: 09000991.1
(22) Anmeldetag: 24.01.2009
(51) Int. Cl.: G06F 21/00

(54) **Verfahren zum Schutz von gespeicherten Betriebsdaten einer Maschinenanlage oder ähnlichen Anlage**

(30) Priorität: 07.02.2008 DE 102008008317
(71) Anmelder: MAN TURBO AG, 46145 Oberhausen (DE)
(72) Erfinder: Blotenberg, Wilfried, Dr.-Ing., 46535 Dislaken (DE); Gebhardt, Ulrich, Dipl.-Ing., 58332 Schwelm (DE)
(74) Vertreter: Radünz, Ingo

(57) **Zusammenfassung**

Die Erfindung betrifft ein Verfahren zum Schutz von gespeicherten Betriebsdaten einer Maschinenanlage oder ähnlichen Anlage, wobei die Betriebsdaten mittels eines zu einem Steuerungssystem der Maschinenanlage oder einem ähnlichen zur Anlage gehörenden Rechnersystems gespeichert werden und wobei die Betriebsdaten fortlaufend in Form von Datensätzen erfasst und zur späteren Auswertung in einem Datenspeicher abgespeichert werden. Dabei wird in einem ersten Schritt mit dem Speichern eines Datensatzes aus den aktuell gespeicherten Betriebsdaten anhand von Parametern (k, 1, m, n) einer vorbestimmten Bestimmungsregel ein Sicherungscode erzeugt und in dem Rechnersystem hinterlegt. In einem zweiten Schritt wird in vorbestimmten Zeitabständen anhand der gleichen Bestimmungsregel aus den aktuell in dem Datenspeicher vorhandenen aufgezeichneten Betriebsdaten ein Vergleichscode zur Verifizierung der aktuell in dem Datenspeicher vorhandenen Betriebsdaten ermittelt. In einem dritten Schritt wird der Vergleichscode mit dem ursprünglich erzeugten Sicherungscode verglichen, und in einem vierten Schritt wird bei einer Abweichung des Vergleichscodes vom ursprünglich erzeugten Sicherungscode ein Warnsignal erzeugt oder eine Schutzaktion ausgelöst.

## Beschreibung

Die Erfindung betrifft ein Verfahren zum Schutz von gespeicherten Betriebsdaten einer Maschinenanlage oder ähnlichen Anlage gegen Manipulation nach dem Oberbegriff des Patentanspruchs 1.

Überwachungssysteme und Schutzsysteme für Maschinenanlagen und zahlreiche andere Anwendungen werden in zunehmendem Maße mit Funktionen zur Aufzeichnung von Betriebsdaten ausgerüstet. Hierzu werden für die Beurteilung des Maschinenzustands die Daten wichtiger Parameter kontinuierlich über Messfühler oder Sensoren erfasst, in digitale Signale umgewandelt und in einem zugehörigen Datenspeicher unverlierbar abgelegt. Solche Systeme zur Aufzeichnung von Daten arbeiten kontinuierlich, d.h. diese Systeme zeichnen den Zustand der Maschinenanlage während des laufenden Betriebes der jeweiligen Maschinen lückenlos auf. Daher gestatten solche aufgezeichneten Betriebsdaten nach Auftreten eines Maschinenschadens eine Rekonstruktion des Vorgangs und geben dadurch Aufschluss über die möglichen Ursachen des aufgetretenen Schadens.

Bei der Aufzeichnung von Betriebsdaten ist es üblich, diese Daten zu Datenblöcken zusammenzufassen und in abgeschlossenen Datensätzen auf einem Datenspeicher abzulegen. Die Größe der Datensätze, d.h. die Länge des von einem abgeschlossenen Datensatz zu erfassenden Betriebszeitraums wird dabei derart gewählt, dass eine Analyse erleichtert wird. Ein abgeschlossener Datensatz mit Betriebsdaten aus einem nur kurze Zeit zurückliegenden Betriebszeitraum kann beispielsweise zeitgleich mit der laufenden Aufzeichnung aktueller Betriebsdaten analysiert werden. Abgeschlossene Datensätze können auch kopiert und auf andere Rechnersysteme übertragen werden. Solche abgeschlossenen Datensätze können jedoch auch gelöscht und damit vernichtet werden.

In der Technik ist es üblich, die Dateien beispielsweise stündlich, täglich, wöchentlich oder monatlich abzuschließen. Damit stehen dann für jede Stunde, jeden Tag, jede Woche oder jeden Monat getrennte Datensätze zur Analyse zur Verfügung.

Weiterhin ist es in der Technik auch gebräuchlich, die aufgezeichneten Betriebsdaten zum besseren Verständnis mit dem beschreibenden Begriff "historische Betriebsdaten" zu benennen.

Bei Maschinenanlagen mit einer Vielzahl von Messstellen, die in hoch transienten Systemen eingesetzt werden, wird häufig ein anderes Verfahren zur Aufzeichnung von Betriebsdaten angewendet, nämlich eine sogenannte ereignisgesteuerte Aufzeichnung. Solange eine in Betrieb befindliche Maschinenanlage störungsfrei läuft, werden die Betriebsdaten nach einer gewissen Betriebszeit überschrieben und somit ältere Betriebsdaten automatisch gelöscht, so dass jeweils nur ein Zeitraum von beispielsweise einer Stunde erhalten bleibt. Tritt ein vordefiniertes Ereignis ein, z.B. ein kritischer Betriebszustand, wird der automatische Löschvorgang unterbrochen. Dann werden die noch nicht gelöschten aufgezeichneten Betriebsdaten als Datensatz auf einem unverlierbaren Datenspeicher gespeichert. Somit bleiben die aufgezeichneten Betriebsdaten für eine spätere Analyse erhalten.

Ein Verfahren des Überschreibens mit einem damit verbundenen automatischen Löschvorgang älterer Betriebsdaten bewirkt, dass die Menge der gespeicherten Daten deutlich reduziert wird und trotzdem ein umfassender Datenbestand von kritischen Betriebszuständen erhalten bleibt.

Insbesondere bei Maschinenanlagen mit aufgetretenen Schäden, deren Ursache darin liegen kann, dass die Maschinenanlage fehlerhaft bedient wurde oder dass beim Auftreten von Störungen in der Maschinenanlage vorbestimmte Warnsignale vom Bedienungspersonal ignoriert wurden, können die aufgezeichneten Betriebsdaten dem Hersteller der Maschinenanlage maßgebliche Hilfe bei einem Nachweis fehlerhafter Bedienung und bei einer Abwehr von unberechtigt geltendgemachten Ansprüchen leisten. Das gleiche gilt für Versicherungsgesellschaften, die durch Analyse der aufgezeichneten Betriebsdaten eine eventuelle Fehlbedienung nachweisen und somit einen eingetretenen Verlust des Versicherungsschutzes geltend machen können.

Üblicherweise werden die Betriebsdaten von Maschinenanlagen oder ähnlichen Anlagen mit PC-basierten Rechnersystemen aufgezeichnet. Als Betriebssysteme werden normalerweise die im Officebereich üblichen Systeme verwendet. Daher kann mit der PC-Technologie vertrautes Betriebspersonal auf die aufgezeichneten Betriebsdaten jederzeit zugreifen und somit diese Daten auch manipulieren. Insbesondere das Betriebspersonal, das den Nachweis von Fehlbedienungen verhindern will, hat durch den Zugriff auf Dateien die Möglichkeit, belastendes Material zu vernichten, indem Teile der Dateien gelöscht oder verändert werden. Der Verlust der Betriebsdaten solcher gelöschten Dateien wird häufig erst zu einem späteren Zeitpunkt festgestellt. Der Nachweis, wann und durch wen die Vernichtung oder Löschung der Dateien erfolgte, kann dann nicht mehr erbracht werden.

Häufig werden die Betriebsdaten auf transportablen Medien gespeichert. Solche transportablen Medien können Personalcomputer sein, die über eine Datenschnittstelle an das Steuerungssystem einer Maschinenanlage oder ähnlichen Anlage angeschlossen sind. Möglich ist auch, einen transportablen Datenspeicher in Form einer Festplatte, CD-ROM, DVD oder eines nichtflüchtigen Halbleiterspeichers als sogenannte Flash-Karte zu verwenden.

Zukünftig wird es weitere Speichermöglichkeiten geben, die nach Bereitstellung der erforderlichen Geräte und Datenträger ebenfalls vorteilhaft genutzt werden können.

Die Aufgabe der Erfindung besteht darin, ein Verfahren zum Schutz von gespeicherten Betriebsdaten einer Maschinenanlage oder ähnlichen Anlage zu schaffen, wobei die Betriebsdaten für einen Nachweis einer Manipulation weitgehend erhalten bleiben sollen.

Die Aufgabe der Erfindung wird mit den Merkmalen des Patentanspruchs 1 gelöst. Weitere Vorteile und Ausbildungen der Erfindung sind in den Unteransprüchen angegeben.

Ein Vorteil der Erfindung gegenüber dem Stand der Technik besteht darin, dass eine Manipulation von gespeicherten Betriebsdaten, z.B. durch Löschen einzelner Datensätze unmittelbar erkannt und gemeldet wird.

Zu dem Zweck ist ein Verfahren zum Schutz von gespeicherten Betriebsdaten einer Maschinenanlage oder ähnlichen Anlage vorgesehen, wobei die Betriebsdaten mittels eines zu einem Steuerungssystem der Maschinenanlage oder einem ähnlichen zur Anlage gehörenden Rechnersystems gespeichert werden und wobei die Betriebsdaten fortlaufend in Form von Datensätzen erfasst und zur späteren Auswertung in einem Datenspeicher abgespeichert werden. Dabei wird in einem ersten Schritt mit dem Speichern eines Datensatzes ein Sicherungscode erzeugt, der aus den gespeicherten oder zu speichernden Daten in der Form hervorgerufen wird, dass durch eine mit variablen Parametern k, 1, m, n versehene Bestimmungsregel Ziffern aus den Betriebsdaten ausgewählt werden und als Teil des Sicherungscodes verwendet werden, wobei die Parameter k, 1, m, n festlegen, aus welchen Datensätzen die wievielte Stelle eines Betriebswertes ausgewählt werden soll, dem Sicherungscode zugefügt und dieser Sicherungscode in dem Rechnersystem hinterlegt wird. Dann wird in einem zweiten Schritt in vorbestimmten Zeitabständen anhand der gleichen Bestimmungsregel aus den aktuell in dem Datenspeicher vorhandenen aufgezeichneten Betriebsdaten ein Vergleichscode zur Verifizierung der aktuell in dem Datenspeicher vorhandenen Betriebsdaten in dem Rechnersystem ermittelt. In einem dritten Schritt wird der Vergleichscode mit dem ursprünglich erzeugten Sicherungscode in dem Rechnersystem verglichen. Schließlich wird in einem vierten Schritt bei einer Abweichung des Vergleichscodes vom ursprünglich erzeugten Sicherungscode ein Warnsignal hervorgerufen oder eine Schutzaktion ausgelöst.

Die Maschinenanlage wird in vorteilhafter Weise mit dem Auftreten des Warnsignals in einen sicheren Betriebszustand überführt oder durch eine vom Warnsignal ausgelöste Schutzaktion stillgesetzt.

Die vorbestimmte Bestimmungsregel ist variabel ausgebildet. Dazu sollen die Parameter der Bestimmungsregel fest vorgewählt sein oder durch einen Zufallsgenerator bestimmt oder aus gespeicherten Betriebsdaten ermittelt werden.

Vorteilhafterweise wird die Prüfung des Sicherungscodes bei jedem Start des Maschinenprogramms, bei jedem Start der Maschinenanlage oder in regelmäßigen Zeitabständen durchgeführt.

Alternativ wird die Prüfung des Sicherungscodes in von einem Zufallsgenerator vorgegebenen Zeiten oder auf einen externen Triggerbefehl hin vorteilhaft durchgeführt.

Nachfolgend wird ein Verfahren mit einer zugehörigen Verschlüsselungstechnik erläutert, die eine Vernichtung oder Manipulation von Betriebsdaten unmittelbar ersichtlich macht.

Gemäß dem Verfahren wird von einem Rechnersystem, das mit dem Steuerungssystem der Maschinenanlage verbunden ist oder ein Teil des Steuerungssystems bildet, nach einer vorbestimmten Bestimmungsregel in einem ersten Schritt aus aktuellen Betriebsdaten ein Sicherungscode erzeugt und im Rechnersystem gespeichert. Der Sicherungscode wird beim Start des Maschinenprogramms zur Steuerung der Maschinenanlage, beim Start der Maschinenanlage oder in regelmäßigen Zeitabständen oder zu vorbestimmten Ereignissen abgefragt.

In einem zweiten Schritt wird in vorbestimmten Zeitabständen anhand der vorbestimmten Bestimmungsregel aus den aktuell im Datenspeicher vorhandenen, fortlaufend aufgezeichneten Betriebsdaten ein Vergleichscode zur Verifizierung der aktuell in dem Datenspeicher vorhandenen Betriebsdaten ermittelt. Dabei können die Zeitabstände fest eingestellt oder von einem Zufallsgenerator bestimmt oder von einem vorbestimmten Ereignis, z.B. Programmstart oder Maschinenstart, abhängig gemacht werden.

In einem dritten Schritt wird der ermittelte Vergleichscode mit dem ursprünglich erzeugten Sicherungscode verglichen. Sollte der aktuelle Vergleichscode nicht mit dem im Rechnersystem der Maschinenanlage hinterlegten Sicherungscode übereinstimmen, wird in einem vierten Schritt ein Warnsignal erzeugt oder eine mit dem Auftreten des Warnsignals verbundene Schutzaktion ausgelöst.

Mit Hervorrufung eines Warnsignals kann alternativ eine Überführung der Maschinenanlage in einen sicheren Betriebszustand durchgeführt oder ein sonstiger massiver Eingriff in den Betrieb der Maschinenanlage vorgenommen werden, wie die Stillsetzung der Maschinenanlage als vorbeugende Schutzaktion. Es kann auch ein automatisch erstelltes Warnsignal an den Maschinenhersteller oder eine von dem Maschinenhersteller benannte Institution gegeben werden.

Der erzeugte Sicherungscode wird nach einer vorbestimmten Bestimmungsregel aus den gespeicherten Betriebsdaten der Maschinenanlage gebildet. Zur Bildung des Sicherungscodes wird bevorzugt aus jeder n-ten Datei der Maschinenanlage die m-te Betriebsgröße ausgewählt und davon aus dem jeweils k-ten Betriebswert die 1-te Stelle ausgelesen und zu dem Sicherungscode zusammengesetzt oder hinzugefügt. Der Sicherungscode besteht demnach aus einer Zahlenkombination, die fortlaufend ergänzt wird.

Beispielsweise möge jede Minute ein Satz Betriebsdaten der Maschinenanlage aufgezeichnet werden und wöchentlich als Datei ein neuer Datensatz mit Betriebsdaten abgelegt werden. Die Parameter seien wie folgt vorbestimmt: Der Parameter n = 5, der Parameter k = 125, 1 = 3, m = Kompressorenddruck; d.h. aus jeder 5. Datei wird aus den Werten der Betriebsgröße mit dem Kompressorenddruck der jeweils 125. Wert ausgelesen und daraus die dritte Stelle dem Sicherungscode zugefügt. Mit der Aufzeichnung werde in einer vorbestimmten Kalenderwoche begonnen, beispielsweise der 14. Kalenderwoche.

In der 18. Kalenderwoche wird die fünfte Datei für die 5. Woche nach Start der Aufzeichnung angelegt, Parameter n = 5. Der 125. Betriebswert, Parameter k = 125, wird am Montag um 02:04 Uhr angelegt. Aus dem zu dem genannten Zeitpunkt gemessenen Wert von z.B. 17,65 bar für den Kompressorenddruck als Betriebsgröße, Parameter m, wird entsprechend der dritten Stelle, Parameter 1 = 3, die Ziffer 6 dem Sicherungscode hinzugefügt.

In der 23. Kalenderwoche wird aus dem am Montag um 02:04 Uhr für den gemessenen Wert des Kompressorenenddrucks von z.B. 14,55 bar als dritte Stelle die Ziffer 5 dem Sicherungscode hinzugefügt.

Demnach würde in der 18. Kalenderwoche die Ziffer 6 dem Sicherungscode hinzugefügt werden, während in der 23. Woche die Ziffer 5 hinzukäme. Das Verfahren wird so lange fortgesetzt, bis die maximale Anzahl an Stellen des Sicherungscodes erreicht ist, beispielsweise 100 Stellen. Dann wird nach dem Prinzip First-in und First-out (FIFO-Prinzip) die erste Ziffer des Sicherungscodes, also die Ziffer 6 vom Montag der 18. Kalenderwoche, gelöscht, während die neu ermittelte Ziffer dem Sicherungscode hinten hinzugefügt wird.

Der Sicherungscode wird innerhalb der Zentraleinheit oder der Central Processing Unit oder CPU der Maschinensteuerung an einer von außen nicht zugänglichen Stelle gespeichert. Jedesmal, wenn eine Prüfung durch Vergleich des Sicherungscodes mit dem Vergleichscode erfolgt, wird der abgespeicherte Sicherungscode mit dem aktuell nach der gleichen Bestimmungsregel ermittelten Vergleichscode verglichen. Bei Übereinstimmung wird die Ausführung des Steuerprogramms fortgesetzt, ansonsten ergeht ein entsprechendes Warnsignal. Darüber hinaus ist als Schutzfunktion vorteilhaft vorgesehen, die Maschinenanlage aufgrund des ausgelösten Warnsignals abzuschalten.

Der Sicherungscode für die erste Inbetriebnahme ist auf verschiedene Arten zu erzeugen. In bevorzugter Weise wird der Datenspeicher mit einer minimalen Anzahl von Dateien ausgeliefert, die eine Generierung des Sicherungscodes zulassen, oder es wird ein Start-Code generiert, mit dem die Anlage ausgeliefert wird.

Üblicherweise sind die Speicherplätze eines Datenspeichers zu Beginn einer Datenaufzeichnung leer, d.h. mit "0" beschrieben. Eine einfache Art der Erstinbetriebnahme besteht darin, die Bestimmungsregel zur Bildung des Sicherungscodes mit Inbetriebnahme der Maschinenanlage sofort anzuwenden. Die sofortige Anwendung führt dann dazu, dass der Sicherungscode zunächst nur aus lauter Nullen besteht und der Schutzmechanismus erst nach einiger Betriebszeit seine volle Wirkung zeigt, was in der Regel bei neuen Maschinenanlagen unkritisch ist, denn häufig erfolgt die Inbetriebnahme einer neuen Maschinenanlage durch Betriebspersonal des Maschinenherstellers, so dass während dieser Erstinbetriebnahme der Datenschutz ohnehin nicht aktiv sein muss.

Bei Maschinenanlagen, in denen der Kunde die Erstinbetriebnahme allein durchführt, kann der Datenspeicher mit Dummydaten von zum Beispiel einem Vorprojekt oder Daten aus der Erprobungsphase im Herstellerwerk gefüllt sein. Der Sicherungscode wird in dem Fall genau so erstellt als wären diese Daten während der Maschinenlaufzeit aufgezeichnet worden.

In einer weiteren Ausgestaltung des Verfahrens werden die Parameter k, 1, m, n der Bestimmungsregel von einem Zufallsgenerator variabel gestaltet. Hierbei muss dann zusätzlich zu jeder Stelle des Sicherungscodes ein Parametersatz abgespeichert werden, damit bei der Erzeugung des Vergleichscodes auf die gleichen Parameter zurückgegriffen werden kann. Die Parameter sollen in einem versteckten Bereich des Datenspeichers hinterlegt oder per E-Mail oder SMS oder auf einem anderen elektronischen Weg dem Maschinenhersteller zugeleitet werden, damit diese Parameter unabhängig gespeichert werden.

Alternativ werden die Parameter selbst aus Betriebsdaten generiert.

Sollte ein Betreiber die aufgezeichneten Daten manipulieren, indem er beispielsweise einzelne Dateien löscht oder durch andere Werte ersetzt, stimmt der aktuell erzeugte Vergleichscode nicht mehr mit dem in der Maschinensteuerung hinterlegten Sicherungscode überein. Dann wird die Maschinensteuerung eine entsprechende Warnung hervorrufen und unter anderem als eine Schutzaktion die Maschinenanlage stillgesetzt.

## Patentansprüche

1. Verfahren zum Schutz von gespeicherten Betriebsdaten einer Maschinenanlage oder ähnlichen Anlage, wobei die Betriebsdaten mittels eines zu einem Steuerungssystem der Maschinenanlage oder einem ähnlichen zur Anlage gehörenden Rechnersystems gespeichert werden und wobei die Betriebsdaten fortlaufend in Form von Datensätzen erfasst und zur späteren Auswertung in einem Datenspeicher abgespeichert werden, **dadurch gekennzeichnet, dass** in einem ersten Schritt mit dem Speichern eines Datensatzes aus den aktuell gespeicherten Betriebsdaten anhand von Parametern (k, l, m, n) einer vorbestimmten Bestimmungsregel ein Sicherungscode erzeugt und in dem Rechnersystem hinterlegt wird, dass in einem zweiten Schritt in vorbestimmten Zeitabständen anhand der gleichen Bestimmungsregel aus den aktuell in dem Datenspeicher vorhandenen aufgezeichneten Betriebsdaten ein Vergleichscode zur Verifizierung der aktuell in dem Datenspeicher vorhandenen Betriebsdaten ermittelt wird, dass in einem dritten Schritt der Vergleichscode mit dem ursprünglich erzeugten Sicherungscode verglichen wird und dass in einem vierten Schritt bei einer Abweichung des Vergleichscodes vom ursprünglich erzeugten Sicherungscode ein Warnsignal erzeugt oder eine Schutzaktion ausgelöst wird.

2. Verfahren nach Anspruch 1, **dadurch gekennzeichnet, dass** als ausgelöste Schutzaktion die Maschinenanlage oder ähnliche Anlage stillgesetzt wird.

3. Verfahren nach Anspruch 1, **dadurch gekennzeichnet, dass** die Parameter (k, l, m, n) der Bestimmungsregel für den Sicherungscode und Vergleichscode fest oder variabel ausgebildet werden.

4. Verfahren nach Anspruch 3, **dadurch gekennzeichnet, dass** die Parameter (k, l, m, n) der Bestimmungsregel für den Sicherungscode und Vergleichscode durch einen Zufallsgenerator bestimmt werden.

5. Verfahren nach Anspruch 4, **dadurch gekennzeichnet, dass** die Parameter (k, l, m, n) der Bestimmungsregel mit den Betriebsdaten gespeichert werden und dass der Vergleichscode mit den gleichen Parametern erzeugt wird.

6. Verfahren nach Anspruch 5, **dadurch gekennzeichnet, dass** die Parameter (k, l, m, n) in einem versteckten Bereich des Datenspeichers abgelegt oder per Datenfernübertragung dem Maschinenhersteller zugeleitet werden und damit unabhängig gespeichert werden.

7. Verfahren nach Anspruch 6, **dadurch gekennzeichnet, dass** die Parameter (k, l, m, n) der Bestimmungsregel verschlüsselt werden.

8. Verfahren nach Anspruch 3, **dadurch gekennzeichnet, dass** die Parameter (k, l, m, n) der Bestimmungsregel für den Sicherungscode und Vergleichscode aus gespeicherten Betriebsdaten ermittelt werden.

9. Verfahren nach einem der Ansprüche 1 bis 3, **dadurch gekennzeichnet, dass** ein Vergleich von Vergleichscode und Sicherungscode bei jedem Start des Maschinenprogramms durchgeführt wird.

10. Verfahren nach einem der Ansprüche 1 bis 3, **dadurch gekennzeichnet, dass** ein Vergleich von Vergleichscode und Sicherungscode bei jedem Start der Maschinenanlage durchgeführt wird.

11. Verfahren nach einem der Ansprüche 1 bis 3, **dadurch gekennzeichnet, dass** ein Vergleich von Vergleichscode und Sicherungscode bei vorbestimmten Betriebszuständen durchgeführt wird.

12. Verfahren nach einem der Ansprüche 1 bis 5, **dadurch gekennzeichnet, dass** ein Vergleich von Vergleichscode und Sicherungscode in regelmäßigen Zeitabständen durchgeführt wird.

13. Verfahren nach einem der Ansprüche 1 bis 5, **dadurch gekennzeichnet, dass** ein Vergleich von Vergleichscode und Sicherungscode in von einem Zufallsgenerator vorgegebenen Zeiten durchgeführt wird.

14. Verfahren nach einem der Ansprüche 1 bis 5, **dadurch gekennzeichnet, dass** ein Vergleich von Vergleichscode und Sicherungscode auf einen externen Triggerbefehl hin durchgeführt wird.
